## Europäisches Patentamt

## European Patent Office

## Office européen des brevets

(19)

(11) Veröffentlichungsnummer: **0 135 103**
**B1**

(12) # EUROPÄISCHE PATENTSCHRIFT

(45) Veröffentlichungstag der Patentschrift:
**01.04.87**

(51) Int. Cl.⁴: **F 27 D 11/08,** H 05 B 7/085

(21) Anmeldenummer: **84109300.8**

(22) Anmeldetag: **06.08.84**

(54) Gleichstromlichtbogenofen.

(30) Priorität: **12.08.83 SE 8304384**

(43) Veröffentlichungstag der Anmeldung:
**27.03.85 Patentblatt 85/13**

(45) Bekanntmachung des Hinweises auf die Patenterteilung:
**01.04.87 Patentblatt 87/14**

(84) Benannte Vertragsstaaten:
**DE FR GB**

(56) Entgegenhaltungen:
**DE - A - 2 554 241
FR - A - 750 542
FR - A - 2 197 988
FR - A - 2 276 388
GB - A - 118 357
US - A - 3 485 927**

(73) Patentinhaber: **ASEA AB, S-721 83 Västeras (SE)**

(72) Erfinder: **Lassander, Erik, Ing., Hästhovsvägen 1,
S-260 40 Viken (SE)**
Erfinder: **Stenkvist, Sven-Einar, Dipl.-Ing.,
Ormbergssvängen 10, S-724 62 Västeras (SE)**

(74) Vertreter: **Boecker, Joachim, Dr.-Ing.,
Rathenauplatz 2-8, D-6000 Frankfurt a.M. 1 (DE)**

## Beschreibung

Die vorliegende Erfindung betrifft einen Gleichstromlichtbogenofen gemäss dem Oberbegriff des Anspruches 1.

Bei solchen Öfen besteht ein Interesse daran, die Abmessungen der Anlage klein zu halten und gleichzeitig bei dem Start mit Hilfe einer Startelektrode schnell einen Schmelzensumpf ausreichender Grösse zu erhalten, um die Startelektrode dann hochziehen zu können und den Strom durch den Bodenkontakt fliessen zu lassen. Bei dem letztgenannten Vorgang dieses Arbeitsablaufes bildet sich ein Lichtbogen zwischen der Lichtbogenelektrode und der Schmelze.

Der Erfindung liegt die Aufgabe zugrunde, einen Gleichstromlichtbogenofen der eingangs genannten Art zu entwickeln, welcher sich durch eine einfache, raumsparende Bauweise und eine einfache Betriebsweise auszeichnet.

Zur Lösung dieser Aufgabe wird ein Gleichstromlichtbogenofen gemäss dem Oberbegriff des Anspruches 1 vorgeschlagen, welcher erfindungsgemäss die im kennzeichnenden Teil des Anspruches 1 genannten Merkmale hat.

Vorteilhafte Ausgestaltungen der Erfindung sind in den weiteren Ansprüchen genannt.

Gemäss der Erfindung sind die Startelektroden durch das Gewölbe gezogen und dichten gleichzeitig auch im hochgezogenen Zustand die Durchführungsöffnung durch das Gewölbe nach aussen ab. Durch diese Anordnung der Startelelektroden hat man einen bedeutenden Gewinn an Platz und erhält einen einfachen Startverlauf für den Ofen. Durch die Verwendung metallischer Startelektroden können höhere Stromdichten und kleinere Elektrodendurchmesser zugelassen werden. An den Startelektroden treten keine nennenswerten Lichtbögen auf, so dass Material mit einem niedrigeren Schmelzpunkt als Graphit usw. verwendet werden kann.

Bei den Metallelektroden lässt sich die Durchführung im Gewölbe leicht abdichten, und die Dichtung bleibt auch bei hochgezogenen Startelektroden erhalten.

Bei einer bevorzugten Ausführungsform der Erfindung werden Startelektroden mit austauschbaren Spitzen verwendet, wodurch die Lebensdauer des Ofens verlängert wird.

Anhand des in den Figuren gezeigten Ausführungsbeispiels soll die Erfindung näher erläutert werden.

Es zeigen

Fig. 1 das Ausführungsbeispiel des Gleichstromlichtbogenofens gemäss der Erfindung mit heruntergeführten Startelektroden,

Fig. 2 den Gleichstromlichtbogenofen gemäss der Erfindung mit hochgezogenen Startelektroden,

Fig. 3 eine Startelektrode.

Die Figuren zeigen einen Gleichstromlichtbogenofen mit einem Ofengefäss 1 mit Boden 2 und Gewölbe 3, der mit einer zentralen Lichtbogenelektrode 4 versehen ist. Es können auch mehrere Lichtbogenelektroden vorhanden sein. Der Ofen ist in üblicher Weise mit einem oder mit mehreren Bodenkontakten 5 oder Bodenelektroden versehen, die als Anode geschaltet sind, beispielsweise über Hängekabel 6 an eine zentral unter dem Ofen angeordnete Stromschiene 7.

Diese Kontakte können über Stromleiter, leitende oder ummantelte Ziegel mit der Schmelze in elektrischem Kontakt stehen.

Der Ofen ist kippbar und hat eine Giessschnauze 8 sowie ein Schürloch 9.

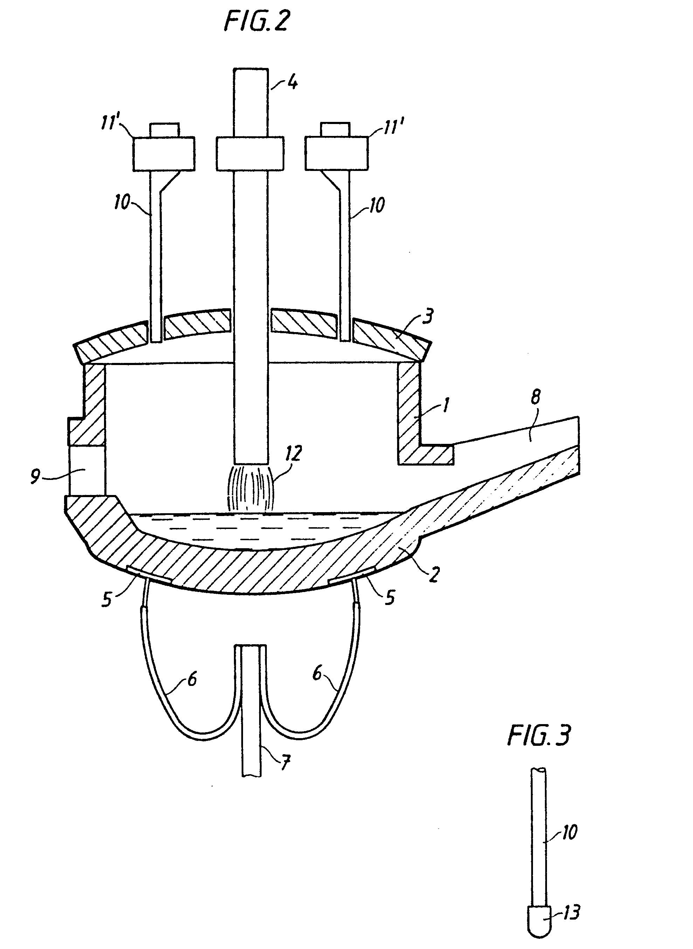

Symmetrisch zu der als Kathode geschalteten Elektrode 4 sind zwei oder mehrere Startelektroden 10 angeordnet, die aus Metall oder aus einer Metallegierung, wie z.B. Kupfer oder Graphit, bestehen, also aus einem Material, das einen niedrigeren Schmelzpunkt als das Material der Lichtbogenelektrode 4 hat, die aus Graphit oder einer Söderberg-Masse besteht. Der Durchmesser dieser Startelektroden 10 ist kleiner als der der Lichtbogenelektrode 4, wodurch man viel Platz gewinnt. In bestimmten Fällen können die Startelektroden auch aus Graphit bestehen oder austauschbare Spitzen haben (siehe Fig. 3).

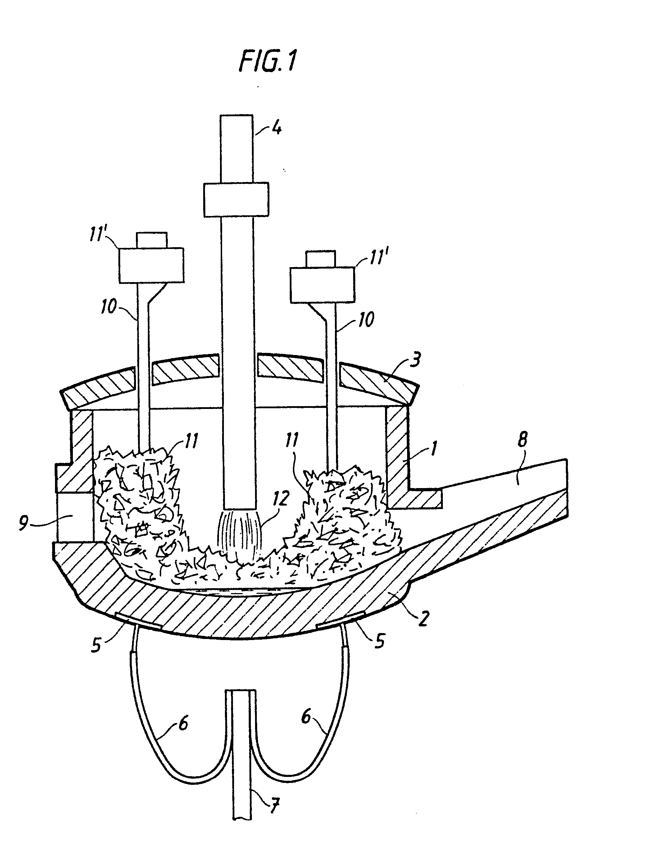

Die Startelektroden 10 werden dann benutzt, wenn keine oder nur eine geringe Menge Schmelze im Ofen vorhanden ist. Die Startelektroden 10 werden durch ihr eigenes Gewicht in die Schrottcharge 11 (Fig. 1) hineingedrückt, so dass ein guter elektrischer Kontakt hergestellt wird. Im Anfangsstadium fliesst der Strom somit über die Startelektroden 10, die Schrottcharge und den Lichtbogen 12 zu der als Kathode angeschlossenen Lichtbogenelektrode 4. Dabei entstehen keine nennenswerten Lichtbögen zwischen den Startelektroden und der Charge.

Wenn sich eine ausreichende Schmelzenmenge gebildet hat, werden die Startelektroden 10 hochgezogen (Fig. 2). Gemäss der Erfindung sind die Startelektroden durch das Gewölbe 3 geführt, wobei die Durchführungen so beschaffen sind, dass die Startelektroden gegenüber der Gewölbewand abdichten. Diese Abdichtung ist nicht nur im heruntergelassenen Zustand der Startelektroden wirksam, sondern auch im hochgezogenen Zustand der Startelektroden. Das Hochziehen der Startelektroden erfolgt ohne Betriebsunterbrechung, und der Strom wird nach dem Abheben der Startelektroden von der Schrottcharge über den Bodenkontakt 5 zugeführt. Durch die Verwendung von metallischen Startelektroden mit kleinerem Querschnitt gewinnt man zusätzlich Platz für die Anbringung der Elektroden. Dadurch, dass auch in hochgezogener Stellung der Startelektroden diese gegenüber der Gewölbewand abdichten, wird die Steuerung dieser Elektroden vereinfacht, und es sind keine Dichtungen erforderlich, die sich über die gesamte Öffnung der Durchführung erstrecken müssen.

Vorzugsweise sind die Startelektroden 10 symmetrisch zur zentralen Lichtbogenelektrode 4 angeordnet.

Sowohl die Startelektroden 10 wie die Lichtbogenelektrode können an den Elektrodenarmen 11' eines Ofens angebracht werden, der ursprünglich für eine Speisung mit dreiphasigem Wechselstrom konstruiert und/oder verwendet wurde.

Das vorstehend beschriebene Ausführungsbeispiel kann im Rahmen des offenbarten allgemeinen Erfindungsgedankens in vielfacher Weise variiert werden.

**Patentansprüche**

1. Gleichstromlichtbogenofen mit mindestens einer Lichtbogenelektrode (4), mit mindestens einem Bodenkontakt oder einer Bodenelektrode (5) und mit mindestens einer Startelektrode (10), wobei die Startelektrode oder die Startelektroden (10) aus Metall oder aus einer Metallegierung, wie z.B. Kupfer oder Graphit, besteht/bestehen und einen kleineren Durchmesser als die Lichtbogenelektrode (4) hat/haben, dadurch gekennzeichnet, dass die Startelektrode/Startelektroden (10) durch Durchführungen in dem Ofengewölbe (3) verlaufen und mit Dichtungen gegen diese Durchführungen abdichten und dass auch bei aus dem Kontakt mit der Charge herausgezogenen Startelektroden (10) die genannten Dichtungen wirksam sind.

2. Gleichstromlichtbogenofen nach Anspruch 1, dadurch gekennzeichnet, dass die Startelektroden austauschbare Graphitspitzen haben.

3. Gleichstromlichtbogenofen nach einem der vorhergehenden Ansprüche, dadurch gekennzeichnet, dass die Anzahl der Startelektroden (10) zwei oder mehr beträgt und dass die Startelektroden vertikal und symmetrisch zu einer zentralen Lichtbogenelektrode (4) angeordnet sind.

4. Gleichstromlichtbogenofen nach einem der vorhergehenden Ansprüche, dadurch gekennzeichnet, dass die Lichtbogenelektrode/Lichtbogenelektroden kathodisch und die Startelektrode/Startelektroden (10) sowie der Bodenkontakt/die Bodenkontakte (5) anodisch angeschlossen ist/sind.

5. Gleichstromlichtbogenofen nach einem der vorhergehenden Ansprüche, dadurch gekennzeichnet, dass die Startelektroden (10) und die Lichtbogenelektrode (4) an den Elektrodenarmen eines Ofens angeordnet sind, der für Dreiphasen-Wechselstrom konstruiert ist.

**Claims**

1. Direct current arc furnace with at least one arcing electrode (4), with at least one bottom contact or one bottom electrode (5) and with at least one starting electrodes (10) the starting electrode or starting electrode (10) consisting of metal or a metal alloy, such as copper or graphite, and having a smaller diameter than the arcing electrode (4), characterized in that the starting electrode/starting electrodes (10) extend through duct holes in the roof (3) and seals/seal with seals against said duct holes, and that said seals are also effective when the starting electrodes are withdrawn from contacting the charge.

2. Direct current arc furnace according to claim 1, characterized in that the starting electrodes are provided with replaceable graphite tips.

3. Direct current arc furnace according to any of the preceding claims, characterized in that the number of starting electrodes (10) are two or more and that the starting electrodes are arranged vertically and symmetrically with respect to a central arcing electrode (4).

4. Direct current arc furnace according to any of the preceding claims, characterized in that the arcing electrode/arcing electrodes are connected as cathodes and that the starting electrode/starting electrodes as well as the bottom contact/bottom contacts (5) are connected anodically.

5. Direct current arc furnace according to any of the preceding claims, characterized in that the starting electrodes (10) and the arcing electrode (4) are arranged on the electrode arms of a furnace designed for three-phase alternating current.

**Revendications**

1. Four à arc électrique alimenté en courant continu, avec au moins une électrode d'arc électrique (4), avec au moins un contact de fond ou une électrode de fond (5) et avec au moins une électrode d'amorçage (10), l'électrode d'amorçage ou les électrodes d'amorçage (10) étant en un métal ou en un alliage métallique, comme par exemple le cuivre, ou le graphite et ayant un diamètre plus faible que celui de l'électrode d'arc électrique (4), caractérisé par le fait que la ou les électrodes d'amorçage (10) s'étendent à travers des passages dans la voûte de four (3) et sont étanches par rapport à ces passages, à l'aide de moyens d'étanchéité, et que ceux-ci sont efficaces même lorsque les électrodes d'amorçage ont été retirées de la charge pour n'avoir plus aucun contact avec celles-ci.

2. Four à arc électrique alimenté en courant continu selon la revendication 1, caractérisé par le fait que les électrodes d'amorçage possèdent des pointes de graphite remplaçables.

3. Four à arc électrique alimenté en courant continu selon l'une des revendications précédentes, caractérisé par le fait que les électrodes d'amorçage (10) sont au nombre de deux ou davantage, et que les électrodes d'amorçage sont disposées verticalement et symétriquement par rapport à une électrode d'arc électrique centrale (4).

4. Four à arc électrique alimenté en courant continu selon l'une des revendications précédentes, caractérisé par le fait que l'électrode d'arc électrique/les électrodes d'arc électrique sont montées en cathodes et l'électrode de démarrage/les électrodes de démarrage (10) ainsi que le contact de fond/les contacts de fond (5) sont montés en anodes.

5. Four à arc électrique alimenté en courant continu selon l'une des revendications précédentes, caractérisé par le fait que les électrodes d'amorçage (10) et les électrodes d'arc électrique (4) sont disposées sur des bras d'électrodes d'un four qui est construit pour un courant triphasé.

## FIG.1

FIG.2

FIG.3